# EUROPEAN PATENT SPECIFICATION

(11) **EP 2 061 250 B1**
(45) Date of publication and mention of the grant of the patent: **28.09.2011**
(21) Application number: 07301554.7
(22) Date of filing: 16.11.2007
(51) Int. Cl.: H04N 7/26

(54) **Deblocking filter**
Deblockierungsfilter
Filtre de déblocage

(43) Date of publication of application: 20.05.2009
(73) Proprietor: STMICROELECTRONICS S.A., 92120 Montrouge (FR)
(72) Inventor: Meroth, Yan, 38160 Saint Marcellin (FR)
(74) Representative: de Beaumont, Michel

(56) References cited:
- US-A1- 2004 228 415
- US-A1- 2006 133 504
- US-B1- 6 792 499
- STEVEN W. SMITH: "The Scientist and Engineer's Guide to Digital Signal Processing, passage" 1997, CALIFORNIA TECHNICAL PUBLISHING , SAN DIEGO, CA 92150-2407 , XP002492766 * pages 506-509 *

## Description

### FIELD OF THE INVENTION

The present invention relates to a deblocking filter, and in particular to a multi-standard deblocking filter.

### BACKGROUND OF THE INVENTION

Deblocking filters are used in video compression/decompression systems to reduce blocking artifacts in each image frame, and thus to improve image quality. Such blocking artifacts result from the block-based processing of pixels during video compression, which can cause step changes in the image data at the boundaries between pixel blocks, referred to herein as edges. The deblocking filter performs a filtering operation on an area of pixels on each side of the edges to smooth the step changes and improve image quality.

There exist numerous compression standards used for video data compression, and new standards continue to be developed. Examples of currently used standards include MPEG-4 SP/ASP (simple profile/advanced simple profile), MPEG-4 AVC (advanced video coding), H.263, H.264, VC1 and DivX6. Standards define specific deblocking filter algorithms to be used, each algorithm being based on certain edges and certain input samples.

It is becoming a requirement in many electronic devices such as set-top boxes, mobile telephones, PDAs (personal digital assistants), hand-held games consoles etc., to provide video decoders that can support multiple video compression/decompression standards. Due to the varying deblocking algorithms used by the different standards, such multi-standard devices generally use dedicated deblocking filters for each format. However, this solution is demanding on chip area. Alternatively, software solutions have been proposed, but these tend to be very demanding on processing power, which is generally not available in small electronics devices, meaning that real-time deblocking is not possible and/or is very power consuming. There is thus a need for a multi-standard deblocking filter circuit that is compact and that can operate in real-time.

Patent Application publication US 2006/133504 relates to a deblocking filter that includes a current macroblock buffer memory configured to store video data of a current macroblock to be filtered, a side macroblock buffer memory configured to store a portion of video data of neighbouring macroblocks located on the side of a current macroblock, a register buffer array configured to store video data read from the current macroblock buffer memory for current filtering, video data read from the side macroblock buffer memory, and data of neighbouring macroblocks, and an edge filter.

### SUMMARY OF THE INVENTION

In is an aim of embodiments of the present invention to at least partially address one or more needs in the prior art.

According to one aspect of the present invention, there is provided a multi-standard deblocking filter for deblocking video images comprising: a deblocking unit arranged to perform deblocking on edges of a current macroblock of an image based on samples taken from a first sample window comprising said current macroblock and a second sample window adjacent to said first sample window; three memory banks coupled to said deblocking unit, a first one of said memory banks arranged to store samples of said first sample window, a second one of said memory banks arranged to store samples of said second sample window, and a third one of said memory banks arranged store samples of a third sample window adjacent to the second sample window comprising a macroblock deblocked in a previous deblocking operation; control circuitry arranged to control, during a same macroblock deblocking operation, loading and deblocking of said current macroblock and outputting of samples of said third sample window from said third one of said memory banks; and renaming circuitry for renaming said memory banks after each deblocking operation such that said first sample window becomes said second sample window and said second sample window becomes said third sample window.

According to another embodiment of the present invention, the multi-standard deblocking filter further comprises first and second buffers arranged to store blocks of samples taken from said first and second sample windows for processing by said deblocking unit.

According to another embodiment of the present invention, the multi-standard deblocking filter further comprises an interconnect coupled to said first and second buffers, to said three memory banks, to a memory controller and to said deblocking unit, said interconnect arranged to allow communication between said first buffer and said deblocking unit at the same time as communication between said second buffer and one of said three memory banks.

According to another aspect of the present invention, there is provided electronic device comprising a processor, a memory and the above multi-standard deblocking filter.

According to anther aspect of the present invention, there is provided a mobile telephone comprising a processor, a memory, a display and the above multi-standard deblocking filter.

According to another aspect of the present invention, there is provided a method of deblocking multi-standard video images, comprising: loading samples of a first sample window of a video image into a first memory bank, said first sample window comprising a current macroblock to be deblocked; deblocking edges of said current macroblock based on samples taken from said first sample window and taken from a second sample window adjacent to said first sample window stored in a second memory bank and storing the result in said first and/or second memory banks; during said loading and deblocking steps, outputting samples of a third sample window stored in a third memory bank; and renaming said first and second memory banks after said deblocking step such that the first sample window becomes the second sample window and the second sample window becomes the third sample window, and loading a next macroblock to be deblocked into said third memory bank.

According to another embodiment of the present invention, said outputting step comprising outputting said samples of the third sample window to a deringing filter.

According to another embodiment of the present invention, loading, deblocking and outputting steps relate to luma samples of a video image, and further comprising performing said steps for chroma samples of said video image.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
Figure 1 illustrates a video decoder according to an embodiment of the present invention;
Figure 2A and 2B illustrate luma and chroma pixel blocks respectively on which one type of deblocking is performed according to embodiments of the present invention;
Figures 3A and 3B illustrate luma and chroma pixel blocks respectively on which another type of deblocking is performed according to embodiments of the present invention;
Figures 3C and 3D illustrate luma and chroma pixel blocks respectively on which another type of deblocking is performed according to embodiments of the present invention;
Figures 3E and 3F illustrate luma and chroma pixel blocks respectively on which another type of deblocking is performed according to embodiments of the present invention;
Figure 4 illustrates a video post-processor according to an embodiment of the present invention;
Figure 5 illustrates a window buffer of the processor of Figure 4 in more detail according to an embodiment of the present invention;
Figures 6A and 6B illustrate luma and chroma pixel blocks respectively and show contents of data banks of Figure 4 according to an embodiment of the present invention;
Figure 7 is a flowchart illustrating steps of a deblocking loop according to embodiments of the present invention;
Figure 8 illustrates the processing order during deblocking according to an embodiment of the present invention;
Figure 9 is a flowchart illustrating steps in a method of performing horizontal or vertical deblocking according to an embodiment of the present invention; and
Figure 10 illustrates an electronics device according to an embodiment of the present invention.

### DETAILED DESCRIPTION OF THE INVENTION

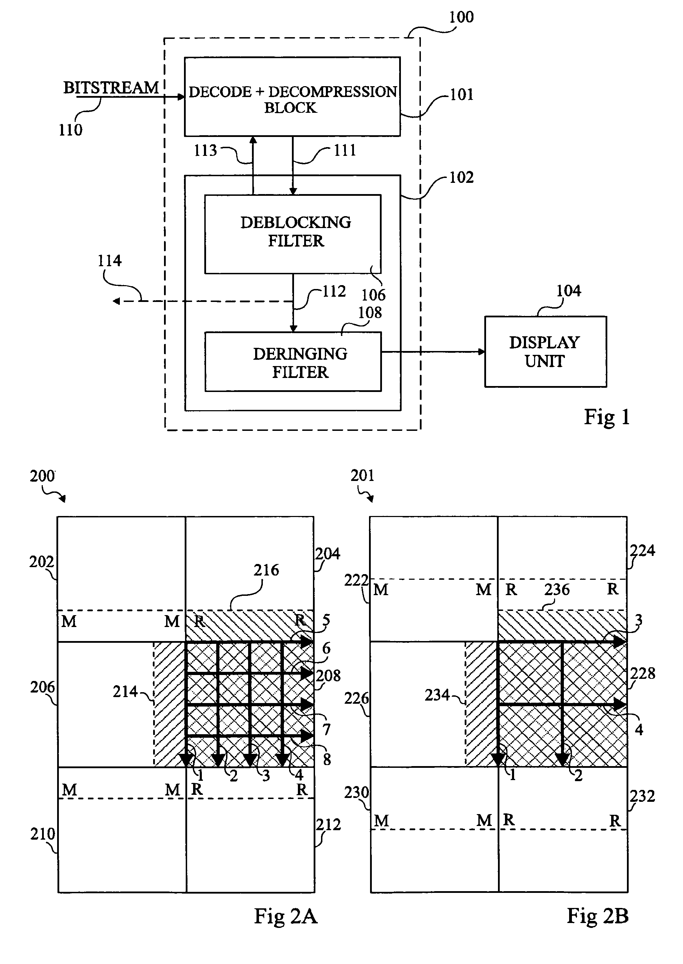

Figure 1 illustrates a video decoding system 100 comprising a decode and decompression block 101 and a deblocking/deringing block 102, coupled to a display unit 104. Decode and decompression block 101 comprises circuitry for decoding and decompressing a bitstream received on an input line 110, which may be encoded and compressed in any one of a number of different standards. Block 101 for example comprises an entropy decoder, an inverse discrete cosine transform block, motion compensation circuitry etc. The output of block 102 is provided to deblocking/deringing block 102, which comprises a deblocking filter 106 and optionally a deringing filter 108. The deblocking filter 106 is a multi-standard filter that is able to perform deblocking according to a number of different standards supported by the decode and decompression block 102, preferably comprising but not limited to MPEG-4, H.263, H.264 (also known as MPEG-4 advanced video coding), H.264 RCDO (reduced complexity decoder operations), VC1, DivX5 (which uses the same deblocking as MPEG-4) and DivX6. Deringing filter 108 receives the output of the deblocking filter, and performs a deringing algorithm that reduces ghost or halo effects in the image that can result from the video decoding process. The output of the deringing block 108 is provided to the display unit 104 for display.

In the example of Figure 1, block 102 can operate as both a video post-processing (VPP) unit of a video decoder that performs deblocking on the video data independently of and after the decoding and decompressing performed by block 102, and also as an in-loop deblocking filter. A bitstream 110 is received, for example from a wireless interface, and decoded, decompressed and reordered by block 101. Decoded and decompressed packets are provided on line 111 to the deblocking filter 106. If the deblocking filter is operating as a VPP unit, the packets are deblocked and output on lines 112 to the deringing filter 108, where a deringing algorithm is applied, and then they are output to a display unit 104. On the other hand, for some video standards, block 102 operates as an in-loop deblocking filter, in which case packets of deblocked data are returned to the decode and decompression block 102 on line 113, prior to being reordered, and output to the deringing filter 108 and display unit 104.

Alternatively, video decoder 100 may be part of a video encoder that implements deblocking prior to compression of the video stream. In this embodiment, bitstream 110 is for example provided from an encode and compression engine (not shown). In this embodiment, no deringing is performed, and the output of the deblocking filter 106 is provided back to the encode and compression engine, as shown by dashed arrow 114, for use in the encoding and compression process to generate a compressed deblocked video bitstream.

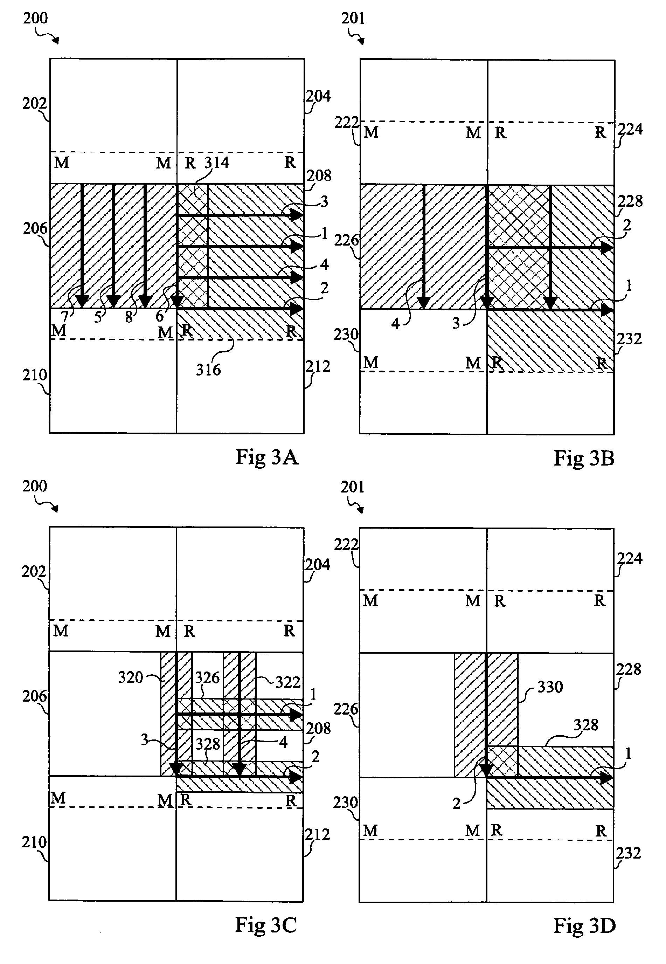

As explained above, deblocking is performed on edges of blocks of samples based on the values of surrounding samples. The location of the edges and the locations of the surrounding samples to be used in the deblocking process depend on the compression standard of the pictures. Deblocking of pictures compressed by H.264, VC1, H.263 and MPEG-4 will now be described with reference to Figures 2A, 2B and 3A to 3F.

Figures 2A and 2B illustrate groups of luma and chroma macroblocks respectively.

With reference to Figure 2A, a group of six luma macroblocks 200 is illustrated comprising two adjacent macroblocks 202, 204 in a first row, two adjacent macroblocks 206, 208, directly below blocks 202 and 204 respectively, and two adjacent macroblocks 210, 212 directly below blocks 206 and 208 respectively. In this example each macroblock represents a set of 16 by 16 luma data samples, each sample comprising 8 bits. In other words, each macroblock represents 16 words of 128 bits. Deblocking is performed by processing each macroblock in turn, using data from that macroblock as well as from a number of adjacent macroblocks.

Figure 2A shows macroblocks from a picture compressed according to the H.264 standard, and illustrates the processing performed to deblock luma samples of macroblock 208. Dark arrows 1 to 8 show the edges that are processed, all of which are within or border macroblock 208, the filter being applied to the numbered edges in order, in the direction of the arrows. Vertical edges 1 to 4 are processed based on samples in region 214 of macroblock 206, adjacent and to the left of macroblock 208, and on the pixel samples of macroblock 208, these regions being diagonally striped from bottom left to top right in Figure 2A. Region 214 represents a rectangle of samples 4 wide and 16 high, bordering edge 1. Horizontal edges 5 to 8 are processed based on the samples in a region 216 of the macroblock 204, adjacent to and above macroblock 208, and on the samples of macroblock 208, these regions being diagonally striped from top left to bottom right in Figure 2A. Region 216 represents a rectangle of samples 16 wide, and 4 high, bordering edge 5.

With reference to Figure 2B, a group of six chroma macroblocks 201 is illustrated comprising two adjacent macroblocks 222, 224 in a first row, two adjacent macroblocks 226, 228 directly below blocks 222 and 224 respectively, and two adjacent macroblocks 230, 232 directly below blocks 226 and 228 respectively. In this example each macroblock represents a set of 8 by 8 red chroma samples, each sample comprising 8 bits. In other words, each macroblock comprises 8 words of 64 bits. Deblocking is performed by processing each chroma macroblock in turn, using data from that macroblock as well as from a number of adjacent macroblocks. The deblocking of macroblocks for blue chroma samples is identical to that of red chroma samples and therefore the blue chroma macroblocks have not been illustrated.

Figure 2B shows part of a picture compressed according to the H.264 standard, and illustrates the processing performed to deblock chroma samples of macroblock 228. Dark arrows 1 to 4 show the edges that are processed, the filter being applied to the numbered edges in order, in the direction of the arrows. Vertical edges 1 and 2 are processed based on samples in region 234 in macroblock 226, adjacent and to the left of macroblock 228, and on the samples of macroblock 228, these regions being diagonally striped from bottom left to top right in Figure 2B. Region 234 represents a rectangle of chroma pixel samples 2 wide and 8 high, bordering edge 1. Horizontal edges 3 and 4 are processed based on the pixels samples in a region 236 of the macroblock 224, adjacent to and above macroblock 228, and on the pixel samples of macroblock 228, these regions being diagonally striped from top left to bottom right in Figure 2B. Region 236 represents a rectangle of chroma samples 8 wide, and 2 high, bordering edge 3.

As will be described in more detail below, deblocking of macroblock 208 is performed by loading two sets of samples into respective memory banks for luma samples, and likewise for chroma samples. These sets will be referred to herein as sample windows. For luma samples, a middle sample window comprises the macroblock to the left the macroblock being processes, i.e. macroblock 206 in Figure 2A, as well as a group of samples above and below this macroblock having the width of a macroblock and a height of four pixels. The middle sample window is shown in Figure 2A with a letter "M" in each corner and delimited top and bottom by a dashed line. A right sample window has the same dimensions as the middle sample window, but is centered on the macroblock being processed, i.e. macroblock 208 in Figure 2A. The right sample window is shown in Figure 2A with a letter "R" in each corner, and delimited top and bottom by a dashed line.

For chroma samples, a middle sample window comprises the macroblock to the left the macroblock being processes, i.e. macroblock 226 in Figure 2B, as well as a group of samples above and below this macroblock having the width of a macroblock and a height of four chroma pixel samples. The middle sample window is shown in Figure 2B with a letter "M" in each corner and delimited top and bottom by a dashed line. A right sample window has the same dimensions as the middle sample window, but is centered on the macroblock being processed, i.e. macroblock 228 in Figure 2A. The right sample window is shown in Figure 2B with a letter "R" in each corner, and delimited top and bottom by a dashed line.

Figures 3A and 3B illustrates the same six luma and chroma macroblocks of Figures 2A and 2B, but show deblocking according to the VC1 standard.

When the luma samples of macroblock 208 are being processed, horizontal edges shown by arrows 1 to 4, which are within or border macroblock 208, are filtered in order. Then, vertical edges 5 to 7, which are all within or border macroblock 206 to the left of macroblock 208, are filtered in order. As illustrated in Figure 3A by the regions diagonally striped from bottom left to top right, for vertical edges, the pixel samples used are the whole of macroblock 206 and a strip of macroblock 208 bordering macroblock 206, which is 4 pixel samples wide and 16 pixels high. As illustrated by regions diagonally striped from top left to bottom right, for horizontal edges, the pixel samples used are the whole of macroblock 208 and a strip of macroblock 212 bordering macroblock 208, which is 16 pixel samples wide and 4 pixel samples high.

When the chroma samples of macroblock 228 are being processed, horizontal edges shown by arrows 1 and 2, which are within or border macroblock 228, are filtered in order. Then, vertical edges 3 and 4, which are all within or border macroblock 226 to the left of macroblock 228, are filtered in order. As illustrated in Figure 3B by the regions diagonally striped from bottom left to top right, for vertical edges, the pixel samples used are the whole of macroblock 226 and a strip of macroblock 228 bordering macroblock 226, which is 4 samples wide and 8 samples high. As illustrated by regions diagonally striped from top left to bottom right, for horizontal edges, the pixel samples used are the whole of macroblock 228 and a strip of macroblock 232 bordering macroblock 228, which is 8 samples wide and 4 samples high.

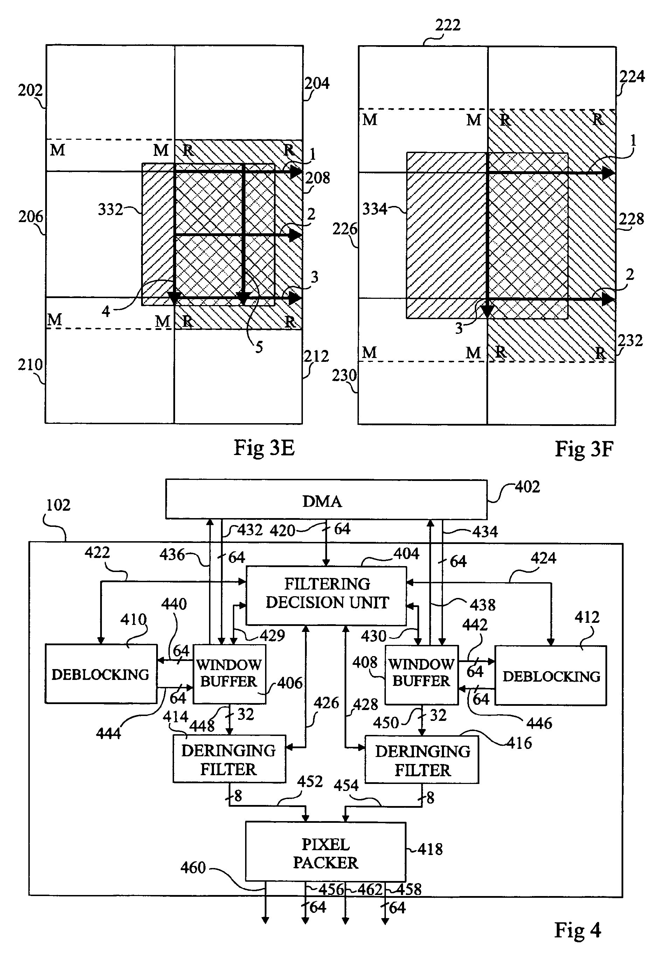

Figures 3C, 3D, 3E and 3F illustrates the same six luma and chroma macroblocks of Figures 2A and 2B, but show deblocking according to the H.263 standard (Figures 3C and 3D) and another type of deblocking (Figures 3E and 3F). In these figures, the same representations are used for the edges and the regions of pixel samples used to filter the edges, and therefore these figures will not be described in detail. However, it should be noted that in Figure 3C, strips 320 and 322 are 4 samples wide and 16 samples high, and strips 328 and 326 are 16 samples wide and 4 samples high. In Figure 3D, strip 328 is 4 samples high and 8 samples wide, and strip 330 is 4 samples wide and 8 samples high. In Figure 3E, region 332 is 2 samples higher than a macroblock, and the same width as a macroblock, and overlaps macroblock 206 by 4 samples. In Figure 3F, region 334 is one macroblock wide, and 2 samples higher the height of a macroblock, and overlaps macroblock 226 by 4 samples.

The middle and right sample windows are the same in the deblocking standards of Figures 3A to 3F described above as for H.264 deblocking of Figures 2A and 2B. This is possible as the size of these sample windows is advantageously chosen to provide the pixel samples used in any of the standards.

Figure 4 illustrates the deblocking/deringing block 102 of Figure 1 in more detail, according to one example. As illustrated, block 102 is coupled to a DMA (direct memory access) unit 402, which provides decoded and decompressed data packets and other parameters from a memory (not shown).

Block 102 comprises a filtering decision unit (FDU) 404, coupled to a window buffer 406 for luma video data, and a window buffer 408 for chroma video data. Window buffer 406 is coupled to a deblocking filter 410 for luma video data, while window buffer 408 is connected to a deblocking filter 412 for chroma video data. Window buffers 406, 408 are further coupled to respective deringing filters 414 and 416, which are in turn coupled to a pixel packer 418.

The FDU 404 receives parameter data from the DMA on lines 420, these parameters being used by the deblocking filters and the deringing filters for processing each data packet. FDU 404 is coupled to the deblocking filters 410, 412 by lines 422, 424 respectively, and to deringing filters 414, 416 by lines 426, 428 respectively, for providing the deblocking and deringing parameters. The deblocking/deringing parameters are specific to the compression standard of the received data packets and are for example generated by a host processor, or by a dedicated hardware block. FDU 404 is also coupled to window buffers 406, 408 by lines 429, 430, for monitoring the status of the window buffers and providing instructions which determine characteristics of the filter processes, such as which edges will or will not be filtered.

The window buffers 406, 408 receive luma data and chroma data packets on respective input lines 432, 434 from the DMA, each data packet comprising 64 bits. Data packets are provided to the window buffers 406, 408 in response to requests made to the DMA on lines 436, 438 respectively, the requests comprising request parameters including for example the location of the pixel samples required, generally defined as the top left corner of the required block of pixel samples, the width and height of the block of pixel samples, the format of the pixel chroma samples, for example blue or red chroma packet, or blue and red samples interleaved, and the scan order, which specifies if packets of a requested area are received in a row-first order or a column first order. Window buffers 406, 408 are accessed by deblocking filters 410, 412 respectively via lines 440, 442, and receive deblocked video data from the deblocking filters via lines 444 and 446 respectively. The window buffers 406, 408 output deblocked video data packets to deringing filters 414 and 416 on lines 448, 450 respectively.

Deringing filters 414 and 416 perform deringing on the video data, and output the data, in this example in 8-bit bytes, on lines 452, 454 to the pixel packer 418.

Pixel packer 418 generates video data packets for output having desired format, for example YCbCr 4:2:0, which is homogeneous with the video codec's input format, or 4:2:2, which is typical of SVideo display. The luma and chroma data packets are output in 64 bits on lines 456 and 458 respectively. Parameters relating to the luma and chroma data respectively are also provided on lines 460, 462, indicating for example the location, width, height, format and scan order of the block of pixel samples being output.

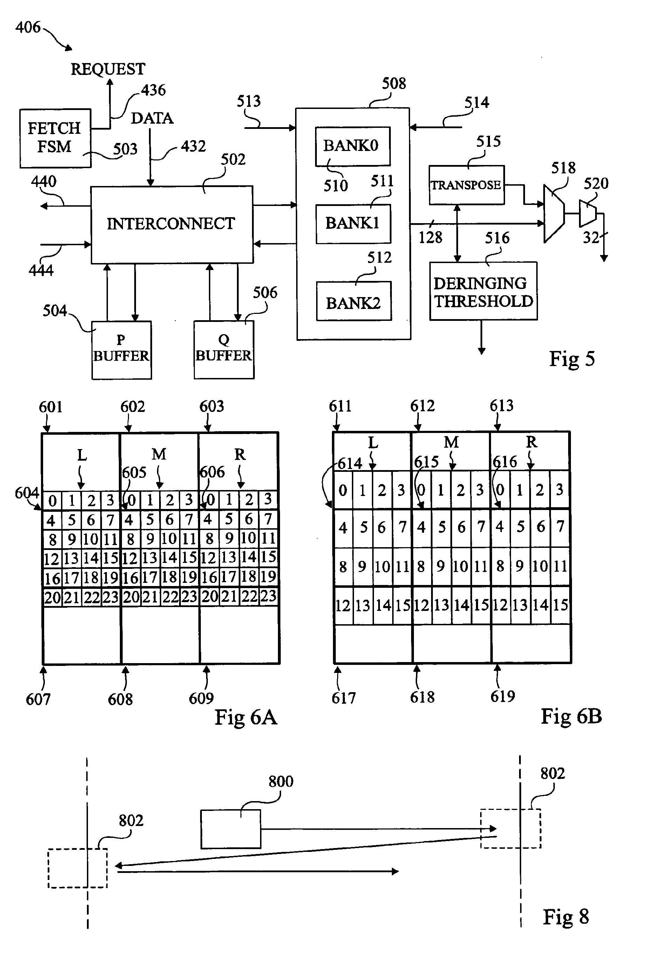

Figure 5 illustrates window buffer 406 relating to luma video data in more detail according to one example. Input/output lines corresponding to those shown in Figure 4 have been labelled with like reference numerals. Window buffer 408 relating to chroma video data may have an almost identical structure as buffer 406, the only difference being the size of the memory banks/buffers as explained in more detail below.

Window buffer 406 comprises an interconnect 502, which receives luma video data on lines 432 from the DMA 402 (not shown in Figure 5) in response to requests made by a fetch FSM (finite state machine) 503 on lines 436. Interconnect 502 is further connected to the deblocking filter 410 via lines 440, 444, to a P buffer 504, to a Q buffer 506, and to a memory 508. Advantageously, interconnect 502 allows data to be retrieved from either P buffer 504 or Q buffer 506 at the same time as the other P or Q buffer is being read from or written to by memory 508.

Memory 508 comprises three memory banks, 510, 511 and 512. It also receives control signals on lines 513 for controlling loading data into and accessing data from interconnect 502, and receives control signals on lines 514 for controlling outputting the data from one of the banks to the deringing filter. The control signals are for example generated by a host processor, embedded microprocessor, micro-programmed finite state machine, hard-wired state machine or the like.

An output of the memory 508 is coupled to a transpose block 515, a deringing threshold block 516, and to one input of a two-input multiplexer 518, which also receives the output of transpose block 515, such that either the original or transposed output can be selected. The output of multiplexer 518 is connected to a multiplexer 520, which is controlled to output the video data in packets of 32 bits.

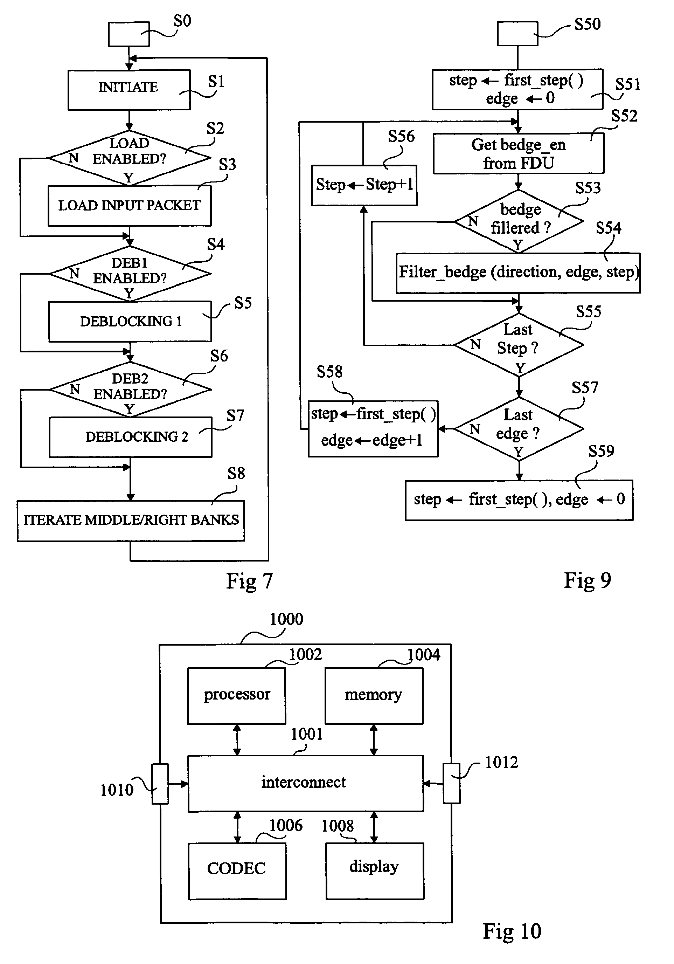

Operation of the window buffer 406 of Figure 5 during deblocking will now be described with reference to Figures 6A, which illustrates a 3 by 3 set of luma macroblocks 601 to 609 at the top left-hand corner of an image and to Figure 7, which is a flow diagram illustrating steps in a method applying a deblocking filter to a macroblock. This is a generic method that applies to all compression standards supported by the embodiments described herein.

Two of the three banks 510, 511 and 512 of memory 508 are used to store a middle and right sample windows, which are used during a current deblocking filtering process. The third bank stores a left sample window, which was previously the middle sample window, and which is ready to be output to the deringing filter. The left sample window is output during the deblocking of the middle and right sample windows. The left, middle and right sample windows relating to macroblocks 604, 605 and 606 respectively are illustrated in Figure 6A, each comprising 24 sub-blocks of 4 by 4 samples. These sub-blocks are labelled 0 to 23 in Figure 6A, and sub-blocks 0 to 3 are part of the macroblock above, while blocks 20 to 23 are part of the macroblock below. For example, the right sample window illustrated comprises sub-blocks 0 to 3, which are the bottom row of sub-blocks of macroblock 603, sub-blocks 4 to 19 are the sub-blocks of macroblock 606, and sub-blocks 20 to 23 are the top row of sub-blocks of macroblock 609. The sub-blocks illustrated in Figure 6A represent the contents of the banks 510, 511 and 512 when the left sample window comprising macroblock 604 has been processed and is ready for output, and the right sample window comprising macroblock 606 has just been loaded for processing, using samples from the middle sample window comprising macroblock 605.

Initially, at the starting step S0 in Figure 7, the three banks 510 to 512 are empty. Transition from S0 to S1 is for example triggered by a host processor. This transition enables parallel execution by fetch FSM 503, which generates requests for sample windows to the DMA according to the scan order described above in relation to Figure 8. A first sample window of an image frame to be loaded comprises macroblock 601 of Figure 6A.

At step S1, an initiate step comprises a check is made whether the bank associated with the right sample window is empty, and an instruction *Instr* is received from the FDU for performing further steps S2, S4 and S6.

At step S2, *Instr* is decoded in order to determine whether or not a new sample window is to be loaded. This process allows the loading of sample windows to be stopped after the last sample window of the image frame has been loaded, but processing continues such that the last sample window is output to the deringing filter. If load is disabled, no sample window load occurs, and the next step is S4. Generally, a load is enabled, and the next step is S3, in which the sample window is loaded into memory 508 as a right sample window. In this example, the first sample window comprises macroblock 601 and is loaded via interconnect 502 into bank 510, preferably via P and Q buffers 504, 506, which allow translation of the sample arrangement of incoming data packets into the desired memory organisation. This first sample window will not comprise any samples from the area above macroblock 601 as there are none, and instead the DMA or window buffer will fill sub-blocks 0 to 3 of the right sample window in the memory bank with zeros for example, or replications of sub-blocks 4 to 7.

Next, in step S4, *Instr* is decoded in order to determine whether a first type of deblocking DEB1 is to be performed. Generally, the first type of deblocking is deblocking relating to horizontal edges, but in some cases it could be deblocking relating to vertical edges. If the DEB1 is enabled, the next step is S5, otherwise it is S6. In the present example, DEB1 is horizontal deblocking, which is performed in step S5 on macroblock 601 based on the right sample window stored in bank 510. Horizontal deblocking does not require any samples from the middle sample window, and therefore it can be performed before a middle sample window has been loaded. This step will be described in more detail below, and involves transferring sub-blocks to buffers 504 and 506 of Figure 5.

In step S6, *Instr* is decoded in order to determine whether a second type of deblocking DEB2 is to be performed. If DEB1 is horizontal deblocking, then DEB2 is vertical deblocking, and vice versa. If DEB2 is to be performed, the next step is S7 in which DEB2 is performed. Otherwise the next step is S8. In the present example, vertical deblocking is performed on the first sample window only in some cases, and for example is performed if the processing to be applied is that of Figure 3C or 3E, but not if the processing to be applied is that of Figure 3A, 3B, 3D or 3F.

In step S8, the right sample window becomes the middle sample window, the middle sample window becomes the left sample window, and the left sample window becomes the right sample window. Rather than transferring data from one of the banks to another, processing power and time are economised by relabelling the banks, such that the bank containing the right sample window is relabelled as the middle sample window, the bank containing the middle sample window is relabelled as the left sample window and the bank containing the left sample window is relabelled the right sample window. This renaming is performed for example by incrementing a counter associated with control inputs 513 that contains the numbers of the banks corresponding to the sample windows. In the present example, bank 510 becomes the middle sample window. After step S8, steps S1 to S8 are repeated.

In the present example, in the second deblock loop, the initiate step S1 now comprises checking whether the right sample window buffer is empty, which is now bank 511, and a second instruction Instr is received from FDU for the steps S2, S4 and S6. In step S3 the second sample window corresponding to macroblock 602 is loaded as a right sample window into bank 511. Horizontal deblocking is performed in step S5, based on the right sample window, and vertical deblocking is performed in step S7 based on both the right and middle sample windows. In step S8, the middle sample window in bank 510 becomes the left sample window, which is ready for output, and the right sample window in bank 511 becomes the middle sample window, while the left sample window in bank 512 becomes the new right sample window.

In the next deblock loop, a third sample window comprising macroblock 603 is fetched in S1 and loaded into bank 512 in S3. The banks 510, 511 and 512 now contain the left, middle and right sample windows respectively relating to macroblocks 601, 602 and 603.

If the deringing filter is to be applied, macroblock 601 is first output to the deringing threshold block 516 shown in Figure 5, in which thresholds used by the deringing filter are computed and stored. Then an output sample window, which is the width of a macroblock wide and two samples more than a macroblock in height, in other words slightly smaller than the left sample window, is output to the deringing filter via multiplexer 520, along with the computed thresholds from block 516. The deringing filter may or may not be applied based on the computed thresholds.

On the other hand, if the deringing filter is not to be applied, the deringing threshold block is not activated to compute thresholds, and an output sample window, which is the width of a macroblock and variable in height, comprising macroblock 601, is output to the deringing filter via multiplexer 520. The output sample window passes through the deringing filter without being filtered.

The output sample windows are provided in packets of 4 adjacent samples of 8 bits, which can be output in row-first or column-first order by either selecting or not selecting the output of transpose block 515 by multiplexer 518.

The deblock loop is repeated until all of the luma macroblocks in an image that need to be deblocked have been, and these have been output to the deringing filter.

Figure 6B illustrates a 3 by 3 block of chroma macroblocks 611 to 619, and illustrates the left, middle and right sample windows relating to macroblocks 614, 615 and 616 respectively. The sample windows each comprise 16 blocks of 4 by 4 blue and red chroma samples, labelled 0 to 15 in Figure 6B. As illustrated by labelling "B" and "R", in this example alternate columns relate to blue and red samples. The blue and red samples are deblocked separately by the deblocking unit 412. The deblocking process for chroma samples is performed in the same way as the process for luma samples, and will not be discussed in detail.

As shown in Figure 8, deblocking of samples in an image frame is preferably performed in "Z" fashion, rows of macroblocks being processed in order from a top row to a bottom row, and macroblocks in each row being processed from left to right. Figure 8 illustrates the three sample windows as a single rectangle 800. At the right-hand end of one row, after the final macroblock in the row has been deblocked and has become part of the middle sample window as shown by dashed rectangle 802, a sample window comprising the first macroblock of the next row can be loaded as the right sample window, and for this macroblock, horizontal deblocking is generally performed, while vertical deblocking is performed only if there are vertical edges inside the macroblock of the right sample window.

The deblocking step S5 of Figure 7 will now be described with reference to the flow diagram shown in Figure 9, and the circuit elements of the window buffer shown in Figure 5.

The filtering of an edge comprises a number of steps, each step comprising filtering four consecutive pieces of edges. A piece of edge is the boundary between two adjacent pixel samples, and thus for example a horizontal edge that traversed a luma macroblock comprises 16 pieces of edge. Each filter step is performed on an 8 by 4 block of samples, in other words two adjacent sub-blocks, of which one sub-block is on one side of the four pieces of edges being processed, and the other sub-block is on the other side of the four pieces of edge being processed. This set of 4 consecutive pieces of edge will be referred to as a block edge or bedge. For example, the horizontal edge between sub-blocks 4 and 8 of macroblock 606 of Figure 6A is a bedge, and sub-blocks 4 and 8 are the samples used to perform deblocking on this bedge. An edge of size N can generally be processed in N/4 bedge steps. For example, a horizontal luma edge comprising 16 pieces of edge can generally be processed in four steps.

In the starting step S50, the start of the deblocking operation is triggered by entering steps DEB1 S5 or DEB2 S7 of the deblocking loop.

In S51, a loop index "step" is set as the first step of the edge to be processed "first_step ()", and a loop index "edge" is set as "0" corresponding to the first edge to be processed. For example, when performing the deblocking shown in Figure 2A, the first edge is edge 1.

The next step is S52, in which parameter bedge_en is retrieved from the FDU 404. This parameter indicates whether or not the particular bedge is to be filtered, typically based on the bedge position within the frame, and global parameters retrieved by FDU 404 from the DMA via link 420.

The next step is S53, in which bedge is checked to determine whether the first bedge is to be filtered. If so, it is filtered in step S54 in an algorithm named "Filter_bedge", which has as input parameters the direction of the filter (vertical or horizontal), the edge index representing which edge is to be filtered, and the step index representing which bedge is to be filtered inside the considered edge. For this, the sub-block on the left or upper side of the bedge to be processed is first loaded in to the P buffer 504 of Figure 5.

In the case of luma values only and not chroma values, an optional RCDO preprocessing is then performed to extract a decision criteria based on sum of absolute differences (SAD) from two consecutive bedges. RCDO is for example used by the H.264 RCDO standard. This step involves loading the sub-block on the other side of the bedge into the Q buffer 506, computing, by the deblocking unit 410, the sum of absolute differences between the contents of the P and Q buffers, loading the P and Q buffers with sub-blocks of a next step, computing the sum of absolute differences again, and merging the results. This result is used during the subsequent deblocking to make filtering decisions. The sub-block on the left or upper side of the bedge is then reloaded into the P buffer.

Whether or not RCDO is performed, the sub-block on the other side of the four pieces of edge to be processed is then loaded into the Q buffer 506 of Figure 5. Each piece of edge is then processed in turn by deblocking unit 410, based on the filtering algorithm to be applied, which for example depends on the compression standard. When completed, the P and Q buffers have been updated, and are stored in the corresponding memory bank of memory 508 to update the corresponding samples. In some embodiments, memory 508 supports partial write access, and the results that would normally be stored by the deblocking unit in the P buffer can be stored directly in memory 508. In this case, only the contents of the Q buffer are written back to memory 508 after deblocking.

In S55, it is determined whether the last step for the processing of the edge has been completed, which means that the current edge has been completed. If not, the step is incremented in S56, and S53 and S54 are repeated. Generally four steps are performed, and once the last step has been completed, S57 is performed.

In S57, it is determined whether the last edge has been filtered. The number of edges depends on the compression standard. If more edges for DEB1 filtering need to be filtered, S58 is performed, in which "step" is reset to "first_step()", and "edge" is incremented, and then steps S52 to S56 are repeated. Otherwise, the S59 is the last step in which "step" is reset to "first_step()" and "edge" is reset to "0".

In alternative embodiments, steps S50 and S51 can be merged into a single step S50, and step S59 replaced by a link to step S50. This allows the state machine of the deblocking filter to be restarted without delay when performing DEB1 followed by DEB2.

S7 of Figure 7 is the same as S5, except that if S5 relates to horizontal edges, then S7 relates to vertical edges, and vice versa.

Figure 10 illustrates an electronic device 1000 comprising an interconnect 1001, coupled to a processor 1002, a memory 1004, a CODEC (compression decompression block) 1006 which comprises the deblocking circuitry described herein, a display 1008, an input port 1010 and an output port 1012. The CODEC 1006 is coupled through the interconnect to the display 1008 for displaying a video stream received either from input port 1010 or stored on memory 1004 and decoded and decompressed by CODEC 1008. Alternatively, video from a camera for example could be input at port 1010, or stored by memory 1004, and encoded using CODEC 1006, including use of the deblocking filter, and the resulting video stream output on port 1012. Device 1000 is for example a mobile telephone, portable games console, portable media player, PDA (personal digital assistant), camcorder or the like. Alternatively, device 1000 could be a set top box, or other type of media player, and may or may not comprise the in-built display 1008.

Advantageously, the embodiments described herein allow deblocking of a macroblock to be performed in two cycles, a first cycle in which the relevant sample window is loaded, and a second cycle in which the updated sample window is stored. This is achieved by providing the system of three memory banks, two of which are used for deblocking a macroblock, and one of which is used for outputting data.

Furthermore, very few load operations are required according to embodiments of the present invention. This is made possible by loading windows of words, each window comprising a macroblock to be processed, as well as pixel samples from two adjacent macroblocks.

Having thus described at least one illustrative embodiment of the invention, various alterations, modifications and improvements will readily occur to those skilled in the art. For example, while deblocking of progressive pictures has been described for common standards, any type of interlaced picture or standard could be supported, by describing the deblocking algorithm in a way so that it is based on processing of one macroblock at a time, and adjusting the size of the sample windows so that the samples that are needed can be present in either the right sample window or the middle sample window.

Furthermore, it will be apparent to those skilled in the art that while in embodiments of the window buffers described herein two P and Q buffers are used for deblocking bedges, in alternative embodiments different buffer arrangements could be used.

While the deblocking filter and window buffers described above are implemented in hardware, certain parts could be implemented in software, which could for example allow the deblocking filter to be reprogrammable during its lifetime, such that it can support new video standards.

## Claims

1. A multi-standard deblocking filter for deblocking video images comprising:
a deblocking unit (410) arranged to perform deblocking on edges of a current macroblock of an image based on samples taken from:
a first sample window comprising said current macroblock and a group of samples above and a group of samples below said current macroblock each having the width of a macroblock and a height of four pixels; and
a second sample window adjacent to said first sample window and having the same dimensions as said first sample window;
three memory banks (510, 511, 512) coupled to said deblocking unit, a first one of said memory banks arranged to store said samples of said first sample window, a second one of said memory banks arranged to store said samples of said second sample window, and a third one of said memory banks arranged to store samples of a third sample window adjacent to the second sample window comprising a macroblock deblocked in a previous deblocking operation;
means for deblocking edges of said current macroblock based on samples taken from said first and second sample windows and storing the result in said first and/or second memory banks; and
control circuitry arranged to control, during a same macroblock deblocking operation, loading and deblocking of said current macroblock and outputting of samples of said third sample window from said third one of said memory banks.

2. The multi-standard deblocking filter of claim 1, further comprising renaming circuitry for renaming said memory banks after each deblocking operation such that said first sample window becomes said second sample window and said second sample window becomes said third sample window.

3. The multi-standard deblocking filter of claim 1 or 2, further comprising first and second buffers (504, 506) arranged to store blocks of samples taken from said first and second sample windows for processing by said deblocking unit (410, 412).

4. The multi-standard deblocking filter of claim 3, further comprising an interconnect coupled to said first and second buffers, to said three memory banks, to a memory controller (402) and to said deblocking unit, said interconnect arranged to allow communication between said first buffer (504) and said deblocking unit at the same time as communication between said second buffer and one of said three memory banks.

5. An electronic device comprising a processor (1002), a memory (1004) and the multi-standard deblocking filter of any of claims 1 to 4.

6. A mobile telephone comprising a processor (1002), a memory (1004), a display (1008) and the multi-standard deblocking filter of any of claims 1 to 4.

7. A method of deblocking multi-standard video images, comprising:
loading samples of a first sample window of a video image into a first memory bank (510, 511, 512), said first sample window comprising a current macroblock to be deblocked and a group of samples above and a group of samples below said current macroblock each having the width of a macroblock and a height of four pixels; and
deblocking edges of said current macroblock based on samples taken from said first sample window and taken from a second sample window adjacent to said first sample window having the same dimensions as said first sample window and stored in a second memory bank (510, 511, 512), and storing the result in said first and/or second memory banks; and
during said loading and deblocking steps, outputting samples of a third sample window stored in a third memory bank (510, 511, 512).

8. The method of claim 7, further comprising renaming said first and second memory banks after said deblocking step such that the first sample window becomes the second sample window and the second sample window becomes the third sample window, and loading a next macroblock to be deblocked into said third memory bank.

9. The method of claim 7 or 8, wherein said outputting step comprising outputting said samples of the third sample window to a deringing filter (414, 416).

10. The method of any of claims 7 to 9, wherein loading, deblocking and outputting steps relate to luma samples of a video image, and further comprising performing said steps for chroma samples of said video image.

## Patentansprüche

1. Ein Multistandard Deblocking-Filter zum Deblockieren von Videobildern, wobei der Multistandard Deblocking-Filter Folgendes aufweist:
eine Deblockiereinheit (410), die so angeordnet ist, um das Deblockieren von Kanten eines aktuellen Makroblocks eines Bildes auszuführen, basierend auf Samples, die von Folgendem entnommen werden:
einem ersten Samplefenster, das den Makroblock und eine Gruppe von Samples über, und eine Gruppe von Samples unter dem aktuellen Makroblock aufweist, wobei jede Gruppe von Samples die Breite eines Makroblocks und eine Höhe von vier Pixel aufweist; und
einem zweiten Samplefenster, benachbart zu dem ersten Samplefenster, das die gleichen Dimensionen wie das erste Samplefenster aufweist;
drei Speicherbänke (510, 511, 512), die mit der Deblockiereinheit verbunden sind, wobei eine erste der Speicherbänke so angeordnet ist, um die Samples des ersten Samplefensters zu speichern und wobei eine zweite der Speicherbänke so angeordnet ist, um die Samples des zweiten Samplefensters zu speichern und wobei eine dritte der Speicherbänke so angeordnet ist, um die Samples eines dritten Samplefensters zu speichern, das benachbart zu dem zweiten Samplefenster ist, das einen Makroblock aufweist, der in einer vorhergehenden Deblockieroperation deblockiert wurde;
Mittel zum Deblockieren von Kanten des aktuellen Makroblocks, basierend auf Samples, die von dem ersten und dem zweiten Samplefenster entnommen wurden und Speichern des Ergebnisses in der ersten und/oder der zweiten Speicherbank; und
einen Steuerschaltkreis, der so angeordnet ist, um während einer gleichen Makroblock Deblockieroperation das Laden und Deblockieren des aktuellen Makroblocks und das Ausgeben der Samples des dritten Samplefensters von der dritten der Speicherbänke zu Steuern.

2. Der Multistandard Deblocking-Filter nach Anspruch 1, wobei der Multistandard Deblocking-Filter ferner einen Umbenennungsschaltkreis aufweist zum Umbenennen der Speicherbänke nach jeder Deblockieroperation und zwar so, dass das erste Samplefenster zum zweiten Samplefenster wird und das zweite Samplefenster zum dritten Samplefenster wird.

3. Der Multistandard Deblocking-Filter nach Anspruch 1 oder 2, wobei der Multistandard Deblocking-Filter ferner einen ersten und einen zweiten Puffer (504, 506) aufweist, der so angeordnet ist, um Blöcke der Samples, die von dem ersten und dem zweiten Samplefenster entnommen wurden, speichert, und zwar zum Verarbeiten durch die Deblockiereinheit (410, 412).

4. Der Multistandard Deblocking-Filter nach Anspruch 3, wobei der Multistandard Deblocking-Filter ferner eine Verbindung aufweist, die an den ersten und den zweiten Puffer, an die drei Speicherbänke, an einen Speichercontroller (402) und an die Deblockiereinheit gekoppelt ist, wobei die Verbindung so angeordnet ist, dass sie eine Kommunikation zwischen dem ersten Puffer (504) und der Deblockiereinheit zur gleichen Zeit erlaubt, wie eine Kommunikation zwischen dem zweiten Puffer und einer der drei Speicherbänke.

5. Eine elektronische Vorrichtung, wobei die elektronische Vorrichtung einen Prozessor (1002), einen Speicher (1004) und den Multistandard Deblocking-Filter nach einem der Ansprüche 1 bis 4 aufweist.

6. Ein Mobiltelefon, wobei das Mobiltelefon einen Prozessor (1002), einen Speicher (1004), eine Anzeige (1008) und den Multistandard Deblocking-Filter nach einem der Ansprüche 1 bis 4 aufweist.

7. Ein Verfahren zum Deblockieren von Multistandard-Videobildern, wobei das Verfahren Folgendes aufweist:
Laden von Samples von einem ersten Samplefenster von einem Videobild in eine erste Speicherbank (510, 511, 512), wobei das erste Samplefenster einen aktuellen Makroblock aufweist, der deblockiert werden soll und eine Gruppe von Samples über, und eine Gruppe von Samples unter dem aktuellen Makroblock, wobei jede Gruppe von Samples die Breite eines Makroblocks und eine Höhe von vier Pixel aufweist
Deblockieren von Kanten des aktuellen Makroblocks, basierend auf Samples, die von dem ersten Samplefenster entnommen wurden und die von einem zweiten Samplefenster entnommen wurden, das benachbart zu dem ersten Samplefenster ist und die gleichen Abmessungen wie das erste Samplefenster aufweist und in einer zweiten Speicherbank (510, 511, 512) gespeichert sind und Speichern des Ergebnisses in der ersten und/oder der zweiten Speicherbank; und
während des Schritts des Ladens und Deblockierens, Ausgeben der Samples eines dritten Samplefensters, die in einer dritten Speicherbank (510, 511, 512) gespeichert sind.

8. Das Verfahren nach Anspruch 7, wobei das Verfahren ferner das Umbenennen der ersten und der zweiten Speicherbänke nach dem Schritt des Deblockierens aufweist und zwar so, dass das erste Samplefenster zum zweiten Samplefenster wird und das zweite Samplefenster zum dritten Samplefenster wird und das Laden eines nächsten zu deblockierenden Makroblocks in die dritte Speicherbank aufweist.

9. Das Verfahren nach Anspruch 7 oder 8, wobei der Schritt des Ausgebens das Ausgeben der Samples von dem dritten Samplefenster an einen Deringing Filter (414, 416) aufweist.

10. Das Verfahren nach einem der Ansprüche 7 bis 9, wobei sich der Schritt des Ladens, des Deblockierens und des Ausgebens auf Luma Samples von einem Videobild bezieht, und wobei das Verfahren ferner das Ausführen dieser Schritte für Chroma Samples von dem Videobild aufweist.

## Revendications

1. Filtre de réduction d'effet de bloc multistandard pour réduire l'effet de bloc d'images vidéo, comprenant :
un module de réduction d'effet de bloc (410) agencé pour réaliser une réduction d'effet de bloc sur des bords d'un macrobloc courant d'une image sur la base d'échantillons pris parmi :
une première fenêtre d'échantillonnage comprenant le macrobloc courant et un groupe d'échantillons au-dessus et un groupe d'échantillons en dessous du macrobloc courant, chacun ayant la largeur du macrobloc et une hauteur de quatre pixels ; et
une deuxième fenêtre d'échantillonnage adjacente à la première fenêtre d'échantillonnage et ayant les mêmes dimensions que la première fenêtre d'échantillonnage ;
trois banques de mémoire (510, 511, 512) couplées au module de réduction d'effet de bloc, une première des banques de mémoire étant agencée pour mémoriser les échantillons de la première fenêtre d'échantillonnage, une deuxième des banques de mémoire étant agencée pour mémoriser les échantillons de la deuxième fenêtre d'échantillonnage, et une troisième des banques de mémoire étant agencée pour mémoriser des échantillons d'une troisième fenêtre d'échantillonnage adjacente à la deuxième fenêtre d'échantillonnage comprenant un macrobloc à effet de bloc réduit dans une opération de réduction d'effet de bloc précédente ;
des moyens pour réduire l'effet de bloc des bords du macrobloc courant sur la base d'échantillons pris dans les première et deuxième fenêtres d'échantillonnage et mémoriser le résultat dans la première et/ou la deuxième banque de mémoire ; et
un circuit de commande agencé pour commander, pendant une même opération de réduction d'effet de bloc d'un macrobloc, le chargement et la réduction d'effet de bloc du macrobloc courant et la fourniture d'échantillons de la troisième fenêtre d'échantillonnage à partir de la troisième des banques de mémoire.

2. Filtre de réduction d'effet de bloc multistandard selon la revendication 1, comprenant en outre un circuit de renommage pour renommer les banques de mémoire après chaque opération de réduction d'effet de bloc de telle sorte que la première fenêtre d'échantillonnage devienne la deuxième fenêtre d'échantillonnage et la deuxième fenêtre d'échantillonnage devienne la troisième fenêtre d'échantillonnage.

3. Filtre de réduction d'effet de bloc multistandard selon la revendication 1 ou 2, comprenant en outre des premier et deuxième tampons (504, 506) agencés pour mémoriser des blocs d'échantillons pris dans les première et deuxième fenêtres d'échantillonnage pour être traités par le module de réduction d'effet de bloc (410, 412).

4. Filtre de réduction d'effet de bloc multistandard selon la revendication 3, comprenant en outre une interconnexion couplée aux premier et deuxième tampons, aux trois banques de mémoire, à un contrôleur de mémoire (402) et au module de réduction d'effet de bloc, l'interconnexion étant agencée pour permettre une communication entre le premier tampon (504) et le module de réduction d'effet de bloc en même temps qu'une communication entre le deuxième tampon et l'une des trois banques de mémoire.

5. Dispositif électronique comprenant un processeur (1002), une mémoire (1004) et le filtre de réduction d'effet de bloc multistandard de l'une quelconque des revendications 1 à 4.

6. Téléphone mobile comprenant un processeur (1002), une mémoire (1004), un afficheur (1008) et le filtre de réduction d'effet de bloc multistandard de l'une quelconque des revendications 1 à 4.

7. Procédé de réduction d'effet de bloc d'images vidéo multistandard, comprenant les étapes suivantes :
charger des échantillons d'une première fenêtre d'échantillonnage d'une image vidéo dans une première banque de mémoire (510, 511, 512), la première fenêtre d'échantillonnage comprenant un macrobloc courant dont on doit réduire l'effet de bloc et un groupe d'échantillons au-dessus et un groupe d'échantillons en-dessous du macrobloc courant, chacun ayant la largeur d'un macrobloc et une hauteur de quatre pixels ; et
réduire l'effet de bloc des bords du macrobloc courant sur la base d'échantillons pris dans la première fenêtre d'échantillonnage et pris dans la deuxième fenêtre d'échantillonnage adjacente à la première fenêtre d'échantillonnage ayant les mêmes dimensions que la première fenêtre d'échantillonnage et mémorisés dans une deuxième banque de mémoire (510, 511, 512), et mémoriser le résultat dans les première et/ou deuxième banques de mémoire ; et
pendant les étapes de chargement et de réduction d'effet de bloc, fournir des échantillons d'une troisième fenêtre d'échantillonnage mémorisés dans une troisième banque de mémoire (510, 511, 512).

8. Procédé selon la revendication 7, comprenant en outre le renommage des première et deuxième banques de mémoire après l'étape de réduction d'effet de bloc de telle sorte que la première fenêtre d'échantillonnage devienne la deuxième fenêtre d'échantillonnage et que la deuxième fenêtre d'échantillonnage devienne la troisième fenêtre d'échantillonnage, et le chargement d'un macrobloc suivant dont on doit réduire l'effet de bloc dans la troisième banque de mémoire.

9. Procédé selon les revendications 7 ou 8, dans lequel l'étape de fourniture comprend la fourniture des échantillons de la fenêtre d'échantillonnage à un filtre d'effet de halo (414, 416).

10. Procédé selon l'une quelconque des revendications 7 à 9, dans lequel les étapes de chargement, de réduction d'effet de bloc et de fourniture concernent des échantillons de luminance d'une image vidéo, et comprenant en outre la réalisation desdites étapes pour des échantillons de chrominance de l'image vidéo.
